# EUROPEAN PATENT APPLICATION

(11) **EP 4 582 295 A1**
(43) Date of publication of application: **09.07.2025**
(21) Application number: 24150462.0
(22) Date of filing: 05.01.2024
(51) Int. Cl.: B60L 53/10, B60L 53/16, B60L 53/18

(54) **MULTI-OUTLET ADAPTER FOR ELECTRIC VEHICLE CHARGER**

(71) Applicant: MULTICHARGE OÜ, 10412 Tallinn (EE)
(72) Inventor: Härm, Juhan, 10412 TALLINN (EE); Kilter, Hindrik, 10412 TALLINN (EE); Tammesoo, Liisa, 10412 TALLINN (EE); Vahtras, Sander, 10412 TALLINN (EE)
(74) Representative: Väänänen, Janne Kalervo

(57) **Abstract**

A multi-outlet adapter for an electric vehicle (EV) charger includes a common power line, a common control unit, and outlets. Each of the outlets can be connected to the common power line and to the common control unit, can comprise one or more electrical conductors that each provide an electrical connection to an electric vehicle, and can comprise one or more relays responsive to the common control unit to electrically connect at least a portion of the common power line to the one or more electrical conductors. The outlets can be operable to connect a different electric vehicle to each outlet at a same time so that the different electric vehicles can be electrically charged at the same time.

## Description

### TECHNICAL FIELD

The present disclosure relates generally to systems for charging electric vehicle batteries.

### BACKGROUND

Electric automobiles whose motive force relies on electricity (an electric vehicle or EV) comprise batteries storing electric charge that is used to drive motors to operate the automobile. The batteries are charged by an electric vehicle (EV) charging station located in a residence or at a commercial or industrial facility. It is important that EV charging stations in commercial and industrial facilities are used efficiently so as to provide an economic return on the cost of the EV charging station. Moreover, EV chargers can be the largest users of electrical current in an electrical power system and, as the number of EV charging stations and the electrical power used by the EV charging stations increases, it is therefore increasingly important that the electrical power systems are efficiently and effectively used.

A typical EV charging station charges a single electric vehicle. Each charging station provides a plug-in connection to a customer's electric vehicle and charges the vehicle until the vehicle is completely charged. The electric vehicle can then be removed from the EV charging station and operated. However, it is often the case that the electric vehicle is charged in the owner's or operator's absence and is not immediately removed from the EV charging station when the electric vehicle is charged. The EV charging station is then occupied but unable to charge a vehicle. Since EV charging stations typically require payment for electrical current provided rather than for the duration of time that an electric vehicle is connected to the EV charging station, a completely charged electric vehicle connected to an EV charging station is not earning money for the EV charging station's owner. Furthermore, another electric vehicle needing charge cannot be charged by the EV charging station so that both EV charging station owners and electric vehicle owners or operators suffer a loss of time and custom. Moreover, EV charging stations are costly, so that an inefficient use of the EV charging stations is expensive.

It is important that three-phase power-distribution systems connected to EV charging stations are balanced and stable, for example the electrical conductors for each phase are equally electrically loaded so that each phase transmits equal amounts of current. Where three-phase power is generated, the loads are quite well balanced but, after distribution, the electrical power is used independently by different customers in different amounts at different locations by different electrical equipment on different phases. These differences in use of the three phases create unequal and asymmetrical impedances in the different phases and unequally distributed single-phase loads, destabilizing the power-distribution system. This destabilization in three-phase power systems has several adverse effects, including increased power transmission line losses, overloaded substation transformers, current breaker tripping, voltage fluctuations, and reduced life of induction motors, among other deleterious effects. Thus, phase load balancing is important to maintain stable and robust operation of three-phase power systems.

From a customer viewpoint it is also highly beneficial to have balanced phase loads. When loads are shared equally, available grid connections are utilized more efficiently and, while providing the same total power, maximum current on each individual phase is reduced. This allows the customer to manage with a smaller grid connection rating, e.g., current rating, thus reducing cost. Large unbalanced single-phase loads also cause more current to flow from that phase compared with other phases and could cause a voltage drop for that phase.

There is a need, therefore, for improvements in EV charging stations that increase efficiency, access, and usability at reduced cost.

### SUMMARY

Embodiments of the present disclosure can provide, among other things, improved EV charging stations with increased efficiency, access, and usability at reduced cost.

According to embodiments of the present disclosure a multi-outlet adapter for an electric vehicle (EV) charger can comprise a common power line, a common control unit, and outlets. Each of the outlets can be connected to the common power line and to the common control unit. Each of the outlets can comprise one or more electrically conductive terminals that each provide an electrical connection to an electric vehicle. Each of the outlets can comprise one or more relays responsive to the common control unit to electrically connect at least a portion of the common power line to the one or more terminals. The outlets can be operable to connect a different electric vehicle to each outlet at a same time so that the different electric vehicles can be electrically charged at the same time. In embodiments, the common power line provides multi-phase electrical power and the common control unit controls the one or more relays in the outlets to electrically connect each of one or more of the electrical phases to one or more of the terminals. The terminals can be connected to an EV through a plug or socket in each outlet.

In embodiments, the common control unit controls the one or more relays in at least one of the outlets to electrically connect each of two or more of the multiple electrical phases to one of the terminals in the outlet. A terminal can be an electrical conductor disposed in a socket of an outlet and can comprise a receptacle for receiving a plug, e.g., from an EV, or a plug for inserting into a receptacle, e.g., from an EV. In embodiments, the multi-phase electrical power comprises at least a first phase and a second phase, the outlets comprise a first outlet and a second outlet, and the common control unit connects the first phase to a terminal in the first outlet and the second phase to a terminal in the second outlet. In embodiments, the multi-phase electrical power comprises at least a first phase, a second phase, and a third phase, the outlets comprise a first outlet, a second outlet, and a third outlet, and the common control unit connects the first phase to a terminal in the first outlet, the second phase to a terminal in the second outlet, and the third phase to a terminal in the third outlet.

According to embodiments of the present disclosure, at least one of the outlets comprises multiple terminals and each of the terminals is electrically connected to a different phase. In some embodiments, one or more of the outlets comprises multiple terminals and each of the terminals is disposed in a different location in the outlet. Each of the multiple electrical phases can be connected to a same terminal in a same location in each outlet. Each of the multiple electrical phases can be connected to a different terminal in a different location in each outlet.

According to embodiments of the present disclosure, the multiple electrical phases can comprise a first phase and a second phase, the outlets can comprise a first outlet and a second outlet, each of the first and second outlets can comprise a first terminal in a first location in the outlet and a second terminal in a second location in the outlet. In embodiments, in the first outlet (i) the first phase is connected to the first terminal, and (ii) the second phase is connected to the second terminal. In embodiments, in the second outlet (i) the first phase is connected to the second terminal, and (ii) the second phase is connected to the first terminal. In some embodiments, the multiple electrical phases can comprise a first phase, a second phase, and a third phase, the outlets can comprise a first outlet, a second outlet, and a third outlet, each of the first, second, and third outlets can comprise a first terminal in a first location in the outlet, a second terminal in a second location in the outlet, and a third terminal in a third location in the outlet. In embodiments, in the first outlet (i) the first phase is connected to the first terminal, (ii) the second phase is connected to the second terminal, and (iii) the third phase is connected to the third terminal. In embodiments, in the second outlet (i) the first phase is connected to the second terminal, (ii) the second phase is connected to the third terminal, and (iii) the third phase is connected to the first terminal. In embodiments, in the third outlet (i) the first phase is connected to the third terminal, (ii) the second phase is connected to the first terminal, and (iii) the third phase is connected to the second terminal.

According to embodiments, the common control unit is operable to control the relays to (i) balance the current flow in each electrical phase of the multi-phase electrical power, (ii) balance the current flow in each relay, (iii) balance the current flow in each outlet, (iv) balance the current flow in each terminal in each of one or more outlets, or (v) any combination of (i), (ii), (iii), or (iv). The outlets can be electrically connected to the common power line through the common control unit.

According to embodiments of the present disclosure, an electric vehicle (EV) charging station can comprise an electric vehicle (EV) charger comprising a common power line, a charger circuit connected to the common power line, and a multi-outlet adapter. The common power line can be operable to receive electrical power and the common control unit can be connected to the charger circuit. The charger circuit can detect the current, current limit, or voltage of the common power line. The common power line can provide multi-phase power and the charger circuit can detect the current, current limit, or voltage of each phase of the multi-phase power. The EV charger can comprise the common control unit.

In some embodiments, an electric vehicle (EV) charging station can comprise a plurality of multi-outlet adapters and, for each of the multi-outlet adapters, the charger output is or is electrically connected to the common power line and the common control unit is connected to the charger circuit.

According to embodiments of the present disclosure, a multi-outlet adapter for an electric vehicle (EV) charger can comprise a common power line, a common control unit, and outlets that are each (i) connected to the common power line, (ii) connected to the common control unit, and (iii) operable to connect a different electric vehicle at a same time so that the different electric vehicles can be electrically charged at the same time. In embodiments, the common control unit provides a separate electrical connection in parallel to each of the outlets. In embodiments, the common control unit provides a common electrical connection to each of the outlets (e.g., a bus) and wherein each of the outlets is individually identified.

According to embodiments of the present disclosure, an electric vehicle (EV) charging station can comprise an electric vehicle (EV) charger connected to a common power line operable to provide electrical power and a charger circuit operable to measure electrical attributes of the common power line, an outlet connected to the common power line and providing an electrical connection to an EV, the outlet operable to charge the EV with electrical power from the common power line, and a control pilot line connected to the charger circuit and the outlet. The electrical power can be multi-phase electrical power, the charger circuit can measure the current or voltage or current limit of one or more phases (e.g., each phase) of the multi-phase electrical power, and one or more of the measurements can be communicated to the outlet.

According to embodiments of the present disclosure, an electric vehicle (EV) charging station can comprise an electric vehicle (EV) charger and a multi-outlet adapter connected to the EV charger. The multi-outlet adapter can comprise a common control unit and outlets, each outlet connected to the common control unit and operable to charge a separate EV. Two or more of the outlets can be connected to a separate EV and the multi-outlet adapter can be operable to (i) provide an amount of current to each of the connected separate EVs and (ii) provide different amounts of current to two or more of the connected separate EVs. The multi-outlet adapter can be operable to provide different amounts of current to two or more of the connected separate EVs in response to a different status of one or more of the connected separate EVs. The different status can be a different payment for electrical current used to charge the one or more of the connected separate EVs. In embodiments, the different status is a different amount of charge in different ones of the two or more of the connected separate EVs. In embodiments, the different status is a completely charged connected separate EV. In embodiments, the multi-outlet adapter can be operable to provide different amounts of current to each of the connected separate EVs at different times or at a same time. In embodiments, the different amounts of current are in response to a connection of an EV to an outlet or disconnection of an EV from an outlet.

According to embodiments of the present disclosure, an electric vehicle (EV) charging station can comprise an electric vehicle (EV) charger connected to a common power line, for example transmitting multi-phase electrical power, and a multi-outlet adapter connected to the EV charger. The multi-outlet adapter can comprise plug/sockets, wherein each plug/socket (i) comprises a terminal, (ii) has substantially the same mechanical structure and physical arrangement of terminals, and (iii) has different phases connected to different terminals than at least one other plug/socket.

According to embodiments of the present disclosure, an electric vehicle (EV) charging station can comprise an electric vehicle (EV) charger connected to a common power line, wherein the common power line transmits multi-phase electrical power, and a multi-outlet adapter connected to the EV charger. The multi-outlet adapter can comprise plug/sockets that each (i) comprise one terminal, (ii) has substantially the same mechanical structure and physical arrangement of the terminal, and (iii) has a different phase connected to the terminal than at least one other plug/socket.

According to embodiments of the present disclosure, a multi-outlet adapter for an electric vehicle (EV) charger can comprise an electric vehicle (EV) charger connected to a common power line, the EV charger providing one or more control pilot lines, and outlets. Each of the outlets (i) can be connected with the other outlets to the common power line and to at least one of the control pilot lines, and (ii) comprises one or more terminals that each provide an electrical connection to an electric vehicle. The outlets can be operable to connect a different electric vehicle to each outlet at a same time so that the different electric vehicles can be electrically charged at the same time.

According to embodiments of the present disclosure, methods of charging multiple electric vehicles at a same time can comprise receiving electrical power, receiving or generating information by a common control unit, analyzing the information by the common control unit, and controlling relays connected to electric vehicles in response to the analyzed information to connect the electrical power to the electrical vehicles. Some embodiments can comprise receiving a status change and controlling the relays in response to the status change.

Embodiments of the present disclosure improve EV charging station efficiency, access, and usability at reduced cost.

### BRIEF DESCRIPTION OF THE DRAWINGS

The foregoing and other objects, aspects, features, and advantages of the present disclosure will become more apparent and better understood by referring to the following description taken in conjunction with the accompanying drawings, in which:
Fig. 1 is a schematic of an electric vehicle charger and a multi-outlet adapter according to illustrative embodiments of the present disclosure;
Fig. 2 is a schematic of a multi-outlet adapter for an EV charging station according to illustrative embodiments of the present disclosure;
Fig. 3 is a flow diagram of methods according to illustrative embodiments of the present disclosure;
Fig. 4 is a flow diagram of methods according to illustrative embodiments of the present disclosure;
Fig. 5A is a schematic of a multi-outlet adapter with a single-phase input and two outlets according to illustrative embodiments of the present disclosure;
Fig. 5B is a schematic of multi-outlet adapter with a three-phase input and two outlets according to illustrative embodiments of the present disclosure;
Fig. 6 is a schematic of a multi-outlet adapter with a three-phase input and a single outlet that connects any phase to any electrical conductor in the outlet according to illustrative embodiments of the present disclosure;
Fig. 7 is a schematic of a multi-outlet adapter with a three-phase input and three outlets with different electrical conductor locations according to illustrative embodiments of the present disclosure; and
Fig. 8 is a schematic of a multi-outlet adapter with a two-phase input and two outlets with different electrical conductor locations according to illustrative embodiments of the present disclosure.

In the Figures, filled-in dots on wires indicate an electrical connection between different wires connected to the filled-in dots.

The features and advantages of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements. The figures are not necessarily drawn to scale.

### DETAILED DESCRIPTION OF CERTAIN EMBODIMENTS

Certain embodiments of the present disclosure are directed toward electric vehicle (EV) charging stations for charging electric vehicles. The charging stations can have reduced cost, improved access, and improved operating efficiency. An EV charging station is a device to which an EV can be electrically connected to provide desired electrical current or electrical charge at a desired electrical voltage (e.g., providing a desired electrical power) to the EV, thereby charging the EV and enabling EV operation. Some embodiments enable a single EV charging station to efficiently charge multiple EVs at a same time, e.g., simultaneously. In some embodiments, an EV charging station comprises an EV charger and an adapter for charging an electric vehicle or a multi-outlet adapter for charging multiple electric vehicles at the same time.

In prior-art designs not according to embodiments of the present disclosure, an EV charger typically receives electrical power (e.g., from a residential, commercial, or industrial power network) from a power line and connects the electrical power to an EV. The EV charger can monitor power use on the power line and can also include a control pilot line (e.g., a CP line) and a proximity pilot line (e.g., a PP line) connected to the EV.

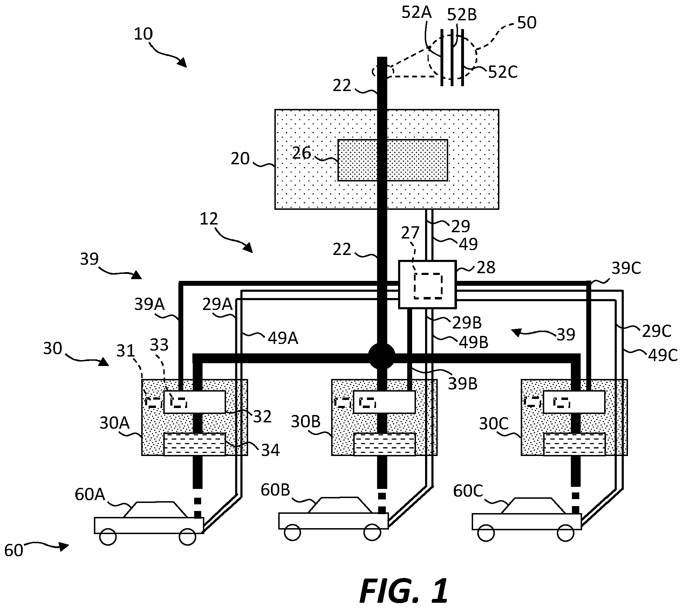

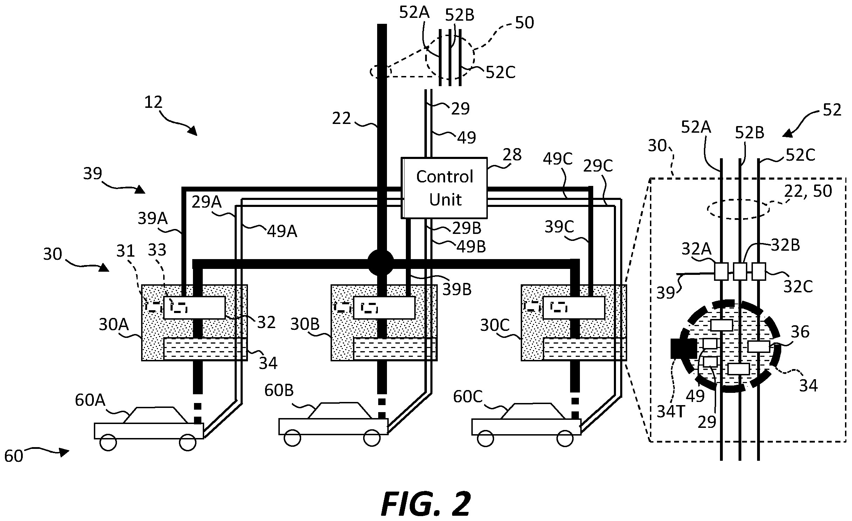

In embodiments of the present disclosure and as illustrated in Figs. 1 and 2, the power line is a common power line 22 that is not directly connected to an EV 60. Similarly, control pilot (CP) line 29 (CP line 29 or CP 29) and proximity pilot (PP) line 49 (PP line 49 or PP 49) are not directly connected to the EV 60. Instead, an EV charger 20 can monitor power use or limitations on common power line 22, for example using a charger circuit 26, and can provide information about electrical power use on common power line 22 to a common control unit 28 using the CP line 29 of a multi-outlet adapter 12 for electric vehicles 60 comprising multiple outlets 30, each outlet 30 connecting to a different electric vehicle 60 at a same time and comprising a separate CP line 29A, 29B, and 29C and a separate PP line 49A, 49B, and 49C. Common control unit 28 can be connected to each of multiple outlets 30 with an outlet control line 39, CP line 29, and PP line 49 for each outlet 30. Common power line 22 is also connected to each outlet 30.

Common control unit 28 can comprise a controller circuit 27 (e.g., a digital, analog circuit, or mixed-signal circuit) that can communicate information to and optionally from each outlet 30 on outlet control line 39. Common control unit 28 and controller circuit 27 can be powered by an external power source, e.g., independently from common power line 22, as can any of outlets 30, as necessary for example for outlet circuits 31, relays 32, or relay circuits 33. Control pilot line 29 can be an electrical communication connection (e.g., CP line 29) used to negotiate charging levels between EV 60 and EV charger 20 and it can be manipulated by EV 60 to initiate charging and can carry other information. In some embodiments, CP line 29 can transmit a square wave at maximum and minimum voltages of substantially of +/- 12 volts generated by EV charger 20 to detect the presence of EV 60, communicate the maximum allowable charging current, and control charging beginning and ending. Proximity pilot line 49 can serve as a charge cable detection and current limitation and can carry other information. PP line 49 can indicate a "plug present", which provides a signal to the EV's control system (e.g., on-board charger) so it can prevent movement while connected to the EV 60 charge supply equipment (e.g., EV charger 20), and signals a latch release button to EV 60. In embodiments, communications can use the LIN communication protocol for communication between system components, for example with CP line 29.

According to embodiments of the present disclosure, an electric vehicle (EV) charging station 10 comprises (i) an electric vehicle (EV) charger 20 comprising a common power line 22 and a charger circuit 26 connected to common power line 22, and (ii) a multi-outlet adapter 12, e.g., for electric vehicles (EVs) 60. In some embodiments, multi-outlet adapter 12 can adapt a variety of different EV chargers 20. Multi-outlet adapter 12 can comprise common power line 22, common control unit 28, and one or more outlets 30.

Common power line 22 is operable to receive electrical power, for example is connected to a power supply such as is provided by a residential, commercial, or industrial power system or power network and can transmit electrical power to multi-outlet adapter 12, for example through EV charger 20. Charger circuit 26 in EV charger 20 can measure attributes of the electrical power on common power line 22, for example a current limit on common power line 22, and communicate the measured attributes to common control unit 28 on outlet control line 39, e.g., using CP line 29. Controller circuit 27 in common control unit 28 can receive the communicated attributes, analyze power use and electrical loads on common power line 22, and communicate results of the analysis to outlets 30 on outlet control line 39, e.g., to control the operation of outlets 30. In some embodiments, controller circuit 27 can also monitor common power line 22.

Outlets 30 are each (i) connected to common power line 22, (ii) connected to common control unit 28, for example with an outlet control line 39 that is separate from common power line 22, (iii) comprise one or more terminals 36 that each provide an electrical connection to an electric vehicle 60, (iv) operable to electrically connect a different electric vehicle 60 to at least a portion of common power line 22 with one or more relays 32 through one or more terminals 36 at a same time (for example simultaneously) under the control of and responsive to common control unit 28 and controller circuit 27 so that different electric vehicles 60 can be electrically charged at the same time. Common control unit 28 can provide a separate outlet control line 39 (e.g., an electrical connection in parallel) to each outlet 30 or can provide a common outlet control line 39 (e.g., an electrical connection using an electrical bus) to each of outlets 30, wherein each of outlets 30 is individually identified and can send or receive messages and information to and from common control unit 28 using outlet control line 39.

Outlets 30 can each comprise (i) one or more terminals 36 that each provide an electrical connection to an electric vehicle (EV) 60 and (ii) one or more relays 32 responsive to common control unit 28 to electrically connect common power line 22 to one or more terminals 36. Relays 32 can comprise one or multiple, individually controllable switches that enable relays 32 to transmit or switch different amounts of electrical current. In some embodiments, relays 32 are electromechanical relays 32. Relays 32 can comprise relay circuits 33 for controlling the switches, storing a switch state, and responding to outlet control lines 39. Each outlet 30 can comprise a single plug/socket 34 having terminals 36 (as shown in Fig. 2) or multiple plug/sockets 34 each having some subset of terminals 36. Terminals 36 can also electrically connect CP lines 29 or PP lines 49 in a single plug/socket 34 (as shown in Fig. 2) or different plug/sockets 34. As used herein, a power terminal 36 is a terminal 36 that conducts electrical current for charging an EV 60.

As shown in Fig. 1 and in Fig. 2, an EV charger 20 of electric vehicle (EV) charging station 10 is connected to and receives power through common power line 22, e.g., a common power line 22 comprising one or more wires that receives electricity (e.g., electrical power from an external power system, such as a residential, commercial, or industrial electrical power network) and transmits the electrical power to multi-outlet adapter 12 for charging EVs 60. Charger circuit 26 of EV charger 20 can monitor the electrical power provided by common power line 22, for example measure electrical current flow, current limits, or electrical voltage of the electrical power and, in some embodiments in which the electrical power on common power line 22 is provided as multi-phase electrical power 50 (each called a phase 52, e.g., phases 52A, 52B, 52C collectively phases 52), measures the current flow, current limit, or voltage of each phase 52. The measurement(s) can be communicated from charger circuit 26 to common control unit 28, for example to controller circuit 27 using CP line 29. Multi-phase electrical power 50 can have any number of phases 52 greater than one, for example two, three, or four. As illustrated in the inset of Fig. 2, multi-phase electrical power 50 can have three phases 52, e.g., phases 52A, 52B, 52C, each transmitted on a different wire to a terminal 36 in a plug/socket 34. As illustrated in the Figures and used in the text herein, for clarity, the signal (e.g., phase 52) of a wire is not distinguished from the wire on which the signal is transmitted. In some embodiments, common control unit 28 selects a different electrical phase 52 for different outlets 30. In some embodiments, common power line 22 provides multi-phase electrical power 50 and common control unit 28 controls relays 32 in outlets 30 to electrically connect multiple electrical phases 52 to outlet 30.

Common control unit 28 is connected to each outlet 30 to control relay(s) 32 in outlets 30, for example with an individual outlet control line 39A (e.g., a wire) to outlet 30A, individual outlet control line 39B (e.g., a wire) to outlet 30B, and individual outlet control line 39C (e.g., a wire) to outlet 30C. Each individual wire can be separate and independent, as shown in Figs. 1 and 2. In some embodiments, common control unit 28 is connected with a common wire (not shown) that acts as a bus connection between common control unit 28 and outlets 30, for example if outlets 30 are each individually addressable.

Each outlet 30 can comprise one or more relays 32 and one or more plugs or sockets 34. Each plug or socket 34 (e.g., plug/socket 34) can comprise one or more terminals 36 (electrical conductors that electrically connect an EV 60 to plug/socket 34). Each outlet 30 receives power from common power line 22, for example in parallel with other outlets 30. Each outlet 30 is also connected to common control unit 28, e.g., with outlet control line(s) 39. In some embodiments, the connection between each outlet 30 connected to common control unit 28 is separate, for example using one or more separate and individual connections illustrated in Figs. 1 and 2 as outlet control lines 39A, 39B, and 39C (collectively referred to as outlet control lines 39) connected to outlets 30A, 30B, and 30C, respectively. In some embodiments (not shown in the Figures), the connection between each outlet 30 is a common connection, for example a bus, and each outlet 30 is individually addressable and is able to identify messages transmitted over the bus to the individual outlet 30.

Each relay 32 in each outlet 30 is responsive to control signals transmitted on the respective outlet control line 39 from common control unit 28 to switch on or off and thereby electrically connect or disconnect at least a portion of common power line 22 (e.g., one or more electrical phases 52) to one or more terminals 36 in plug/socket 34. For example, common control unit 28 can control relays 32 in at least one of outlets 30 to electrically connect one of two or more of the multiple electrical phases 52 to one of terminals 36 in outlet 30.

A different EV 60 (e.g., EV 60A, 60B, 60C, collectively EVs 60) can be individually electrically connected to each outlet 30 (e.g., one of outlets 30A, 30B, and 30C respectively) through plug/socket 34 and receives electrical power from common power line 22 when a corresponding relay 32 is switched on under the control of common control unit 28 through outlet control line 39. In some embodiments, each outlet control line 39 can comprise multiple wires. Some of the multiple wires can be connected to relays 32 and others of the multiple wires can be separately connected to EVs 60. Each individual CP line 29 or PP line 49 can also be connected to a respective EV 60 through different terminals in plug/socket 34. The term wires" or "lines" as used herein with respect to outlet control line(s) 39, proximity pilot line 49, or control pilot line 29 can refer to electrical wires transmitting electrical communication signals. Control pilot line 29, proximity pilot line 49, or outlet control line(s) 39 or individual wires can transmit information in one direction or bidirectionally.

As shown in Fig. 2, each outlet 30 can comprise a relay 32 for each wire comprising common power line 22 and conducting a phase 52 to a power terminal 36 in plug/socket 34. If common power line 22 for an outlet 30 comprises a single wire (e.g., transmits a single phase 52 of electrical power), outlet 30 can comprise a single relay 32. In some embodiments and as shown in Fig. 2 in the small detail diagram, common power line 22 comprises multiple wires transmitting multi-phase electrical power 50 connected to respective relays 32. One wire for each phase 52 is connected to a relay 32 in outlet 30. As illustrated in Fig. 2, wires and phases 52A, 52B, 52C (collectively phases 52 and wires) for a three-phase multi-phase power supply 50 are electrically connected to respective relays 32A, 32B, 32C, collectively relays 32). Each relay 32 is operable to switch the phase 52 of power to which relay 32 is connected responsive to control signals provided over outlet control line 39 from common control unit 28 to a power terminal 36 in plug/socket 34. In some embodiments, relays 32 can also control the quantity of electrical current that passes through relays 32.

Plug/socket 34 can comprise one or more terminals 36, for example a terminal 36 for each phase 52 of multi-phase power 50 supply and relay 32 in outlet 30. Each terminal 36 can be electrically connected to the switched output of a corresponding relay 32 in outlet 30. Plug/socket 34 can comprise a mechanical and electrical structure that can electrically connect each terminal 36 to a corresponding conductor from an EV 60. Plug/socket 34 can comprise a mechanical alignment and orientation tab 34T to control the orientation and relative connection between multiple terminals 36 of outlet 30 and wires or other electrical connections from an EV 60. Figure 2 illustrates a plug/socket 34 comprising three terminals 36 mechanically oriented with tab 34T to provide three electrical connections to an EV 60 electrically connected to each terminal 36 in plug/socket 34 but plug/socket 34 can comprise one or more terminals 36, each corresponding to a phase 52. In some embodiments, multiple terminals 36 in a plug/socket 34 are connected to a common phase 52 to reduce the electrical current passing through each terminal 36.

In some embodiments, a plug of an outlet 30 (e.g., an outlet plug) comprises one or more terminals 36 with protruding electrical contacts (e.g., wires, conductors) for insertion into an EV 60 receptacle or socket, each protruding electrical contact of the plug making an electrical connection to a corresponding electrical conductor in the EV 60 receptacle or socket, thereby making one or more electrical connections between outlet 30 and EV 60 through a terminal 36. In some embodiments, outlet 30 comprises a socket (e.g., an outlet receptacle or outlet socket) comprising one or more terminals 36 for receiving a plug with protruding electrical contacts from an EV 60, thereby making one or more electrical connections between outlet 30 and EV 60 through a terminal 36. As used herein, a terminal 36 of an outlet 30 can be comprised in a plug or a socket (e.g., plug/socket 34) so that outlet 30 can electrically connect to a variety of electrical devices (such as EVs 60) using different physical formats or structures to make an electrical connection to outlet 30. In the present disclosure, the terms 'plug', 'socket', or `receptacle' can specify a structure or device and are used as nouns that can be used interchangeably. The term 'plug' can also be used to denote an action (e.g., is a verb) in which a plug having electrical contacts is inserted into a socket or receptable having corresponding electrical contacts to make an electrical connection between the electrical contacts in the plug and the electrical contacts in outlet 30, e.g., in the receptacle or socket, e.g., the plug is plugged into the socket. In embodiments, common power line 22 and plug/socket 34 also includes a terminal 36 for a ground electrical connection (but a ground electrical connection is not separately shown in the Figures).

As used herein, a first device that controls another second device is also operable to control the other second device, a first device that selects another second device is also operable to select the other second device, a first device that connects to a second device is also operable to connect to the second device, a first device that responds to a second device is also operable to respond to the second device, a device that provides, analyzes, or determines something is also operable to provide, analyze, or determine the thing, and a device that detects an attribute is also operable to detect the attribute. More generally, a first device that acts upon a second device is operable to act upon the second device.

According to embodiments of the present disclosure, common power line 22 can be a single- or multi-phase power line or power supply, for example comprising one or multiple wires. Each wire can be individually insulated, common power line 22 can comprise multiple wires, and the multiple wires can also be enclosed in an insulating sheath. The wires can be conductors, for example copper wires having a size or cross section large enough to safely conduct the desired amount of electrical current, for example as is specified by construction codes promulgated by a local government. Common power line 22 can be connected to EV charger 20, can pass through EV charger 20, or can be separate from EV charger 20. Similarly, common power line 22 can be connected to common control unit 28, can pass through common control unit 28, or can be separate from common control unit 28 (as shown in Figs. 1 and 2).

Common power line 22 is connected to each outlet 30 and is connected to one or more relays 32 in each outlet 30 that switches electrical power provided by or available from common power line 22. Thus, each relay 32 receives electrical power from common power line 22 at a relay input and provides electrical power from a relay output when switched on and provides no electrical power at the relay output when switched off. Relay 32 can comprise a relay circuit 33, for example operable to directly control one or more switches in relay 32, store information, and receive information, e.g., via outlet control line 39. Each relay 32 can be a controlled switch, e.g., an electronically or electrically controlled switch, and is controlled by outlet control line 39 from common control unit 28 or a relay circuit 33 in response to information provided through outlet control line 39 from common control circuit 28. Relay 32 can be a digital or an analog switch and can conduct current, when on, does not conduct current when off, and has a breakdown voltage suitable for the amount of electrical current conducted at a voltage suitable for each outlet 30.

Common control unit 28 can comprise an electrical or electronic circuit, for example a digital circuit, an analog circuit, or a mixed digital-analog circuit. Common control unit 28 can comprise sensors for sensing electrical power use in common power line 22 or can receive information regarding electrical power use in common power line 22 from EV charger 20 using CP line 29. Common control unit 28 can provide control signals, for example through outlet control lines 39 to outlets 30 to control relays 32 in outlets 30. Common control unit 28 can comprise a controller circuit 27 operable to receive or input information from control pilot line 29 or proximity pilot line 49 (e.g., electrical power or connection information), analyze the received information, compute or calculate control signals for relays 32, and transmit control signals to relays 32 (e.g., to any relay circuits 33). In some embodiments, common control unit 28 can provide or receive control signals from EVs 60, either in common with control signals provided to outlets 30 and relays 32 and with common connections (as shown in Figs. 1 and 2) or with separate connections (not shown). Control signals communicated on outlet control lines 39 or EV charger 20 control pilot line 29 or proximity pilot line 49 can be analog or digital, or a mixture of analog or digital signals. Common control unit 28 can comprise or be an analog or digital computer (e.g., a stored program machine), can be or comprise a state machine, or can comprise other control circuitry. Common control unit 28 can also comprise sensors for sensing power use on common power line 22, e.g., as part of controller circuit 27.

Outlets 30 can comprise a plug or socket 34, for example made of metal or plastic, and comprising terminals 36. Outlets 30 can comprise an input or connection, e.g., an electrical wire input or connection, to common power line 22 that is electrically connected to relay(s) 32. Where electrical power provided by common power line 22 is multi-phase electrical power 50, outlet 30 can comprise a separate relay 32 electrically connected to each phase 52 provided on a separate wire, as shown in the large detail diagram of Fig. 2. The output from each relay 32 is electrically connected to a separate terminal 36 providing an electrical connection to EV 60. Outlet 30 can also comprise an outlet circuit 31 different from relay circuits 33 responsive to outlet control line 39 to control relays 32.

Each EV 60 can receive electrical power from plug/socket 34 of an outlet 30. The electrical power, e.g., electrical current, can be provided on a single wire and comprise a single phase 52, can be provided on multiple wires and comprise a single phase 52, or can be provided on multiple wires and comprise multiple phases 52. Fig. 2 illustrates an embodiment having three phases 52. An electrical connection between EV 60 and outlet 30 can use a standard interface, both physical and electrical, for example using a standard plug/socket 34 that is inserted into an EV 60 or a standard plug/socket 34 that receives one or more electrical connections from an EV 60.

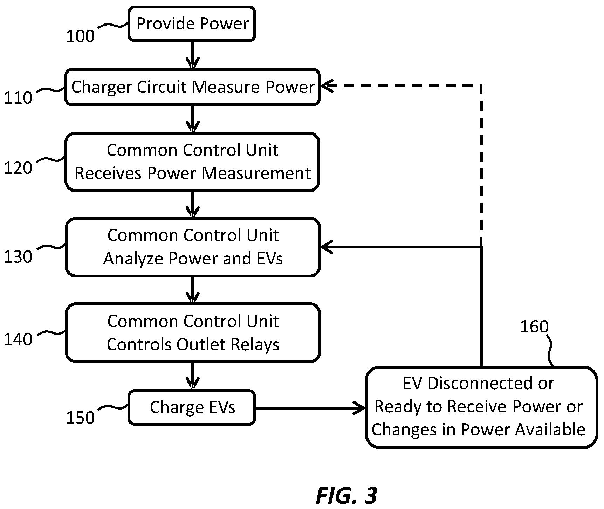

According to embodiments of the present disclosure, common control unit 28 enables efficient and cost-effective charging for multiple EVs 60 for a multi-outlet adapter 12 for electric vehicles 60. In operation and as illustrated in Fig. 3, an EV charger 20 of electric vehicle charging station 10 receives electrical power in step 100, for example from common power line 22 connected to an electrical power system, optionally measures the electrical power (e.g., current, current limit, or voltage) using charger circuit 26 in step 110, and optionally transmits the power measurement to common control unit 28 where it is received in step 120, for example with CP line 29. Common control unit 28 can also receive EV 60 information, such as connectivity, attributes, or electrical charge state (e.g., using CP or PP lines 29, 49). In some embodiments, common control unit 28 includes electrical sensors and generates at least some information regarding electrical power, for example electrical information about phases 52 where common power line 22 provides multi-phase electricity, for example using controller circuit 27. In some embodiments, common control unit 28, for example using controller circuit 27, can analyze the electrical power and connected EVs 60 information (e.g., common power line 22 voltage or current and EV attributes, state, or status) in step 130 to determine an appropriate and efficient distribution of electrical power to EVs 60 connected to relays 32 in outlets 30. Step 130 can be optional. Common control unit 28 then controls relays 32 in outlets 30 through outlet control lines 39 in step 140 to electrically charge EVs 60 in step 150.

Common control unit 28 can also communicate with EVs 60. When any EV 60 is electrically charged (step 160), it can indicate to common control unit 28 that it is electrically charged and common control unit 28 can then turn off relays 32 connected to the electrically charged EV 60 in step 130 and continue charging the remaining EVs 60, possibly with increased electrical current. In some embodiments, charger circuit 26 provides changes in measured electrical power attributes to common control unit 28 (step 110) using CP line 29 and, in response (step 120), common control unit 28 re-analyzes the power measurements and EV information for EVs 60 connected to outlets 30 (step 130) and controls outlet relays 32 in response to the analysis, for example using controller circuit 27 (step 140). In some embodiments, charger circuit 26 or controller circuit 27, or both, continuously monitor the status of common power line 22 (e.g., current limit or current) and any EVs 60 connected to an outlet 30, for example using CP line 29 and respond to any changes by controlling relays 32 in outlets 30. More generally, changes in the EVs 60 themselves (or EV information), change in EV 60 connections to outlets 30, changes in power provided, or changes in measurements of power or power availability can interrupt EV charger 20 or common control unit 28 so that EV charger 20 or common control unit 28 responds to the changes. Thus, EV charger 20 or common control unit 28 can be or comprise interrupt-driven circuits or controllers or can comprise circuits that monitor EVs 60 or power measurements and provide an interrupt in response to a change in common power line 22 or EV 60 status. For example, step 150 can continue over time until an interruption (step 160 or step 110) occurs, indicating a change.

Thus, according to some embodiments of the present disclosure, a method of charging multiple electric vehicles 60 at a same time comprises receiving electrical power (e.g., multi-phase electrical power 50 on common power line 22), receiving or generating information by a common control unit 28 (e.g., phase 52, voltage, or current information), analyzing the information using controller circuit 27 of common control unit 28, and controlling relays 32 connected to electric vehicles 60 in response to the analyzed information to connect the electrical power to electrical vehicles 60.

In some embodiments, an EV 60 is removed or disconnected from an outlet 30 or an EV 60 is added to an outlet 30. In these cases, common control unit 28 can be informed of the change in status of each outlet 30 through outlet control lines 39, CP lines 29, or PP lines 49 (e.g., with an interruption) and relays 32 can be controlled (e.g., turned on, turned off, or current controlled) as appropriate to efficiently balance (e.g., make substantially equal or as otherwise desired to the extent possible) current use for electric vehicle charging station 10. Thus, multi-outlet adapter 12 for electric vehicles 60 is adaptive over time to changes in status of any one or more EVs 60 connected to multi-outlet adapter 12. For example, common control circuit 28 can adjust relays 32 to turn some relays 32 on, turn some relays 32 off, or provide different amounts of electrical current to different outlets 30 depending on the number and needs of EVs 60 connected to outlets 30 over time as EVs 60 are electrically charged, disconnected (removed from an outlet 30), added (connected to an outlet 30), or replaced in outlets 30 of multi-outlet adapter 12. Thus, embodiments of the present disclosure provide an adaptable, useful, and efficient EV 60 charging station 10 suitable for changing needs and circumstances over time.

Common control unit 28 can control relays 32 to provide substantially similar electrical power to each EV 60 or to draw substantially similar electrical power from each phase 52 of multi-phase electrical power 50 of common power line 22. By providing substantially equal amounts of electrical power to each EV 60 or to draw substantially similar amounts of electrical power from each phase 52, the power provided on common power line 22 is balanced and efficiently used. In some embodiments, EVs 60 attached to outlets 30 of a multi-outlet adapter 12 for electric vehicles 60 are different EVs 60 or otherwise require different electrical charging currents. Common control unit 28 can be operable to provide different currents to different EVs 60 and balance the current drawn from each phase 52 to maintain power system efficiency.

In a first example, a multi-outlet adapter 12 for electric vehicles 60 with three outlets 30 and a three-phase common power line 22 capable of providing eighteen amperes (amps) total of electrical current can provide six amps of electric current to a first EV 60A connected to a first outlet 30A on a first phase 52A, six amps of electric current to a second EV 60B connected to a second outlet 30B on a second phase 52B, and six amps of electric current to a third EV 60C connected to a third outlet 30C on a third phase 52C. In a second example (not shown in the Figures), a multi-outlet adapter 12 for electric vehicles 60 with four outlets 30 and a three-phase common power line 22 capable of providing thirty-six amperes (amps) total of electrical current can provide twelve amps of electric current to a first EV 60A connected to a first outlet 30A on a first phase 52A, twelve amps of electric current to a second EV 60B connected to a second outlet 30B on a second phase 52B, six amps of electric current to a third EV 60C connected to a third outlet 30C on a third phase 52C, and six amps of electric current to a fourth EV 60D (not shown in the Figures) connected to a fourth outlet 30D on third phase 52C. Thus, all four EVs 60 are electrically charged at a same time (albeit at different rates and with different currents) and the electrical current drawn on all three phases 52 is the same, providing a balanced and efficient electrical power system. If one of EVs 60 (e.g., fourth EV 60D, not shown in the Figures) is electrically charged, relays 32D can be switched off and the current on phase 52C entirely redistributed to relay 32C and EV 60C, so that all three phases 52 are equally loaded and all three remaining EVs 60 are electrically charged with an equal current of twelve amps.

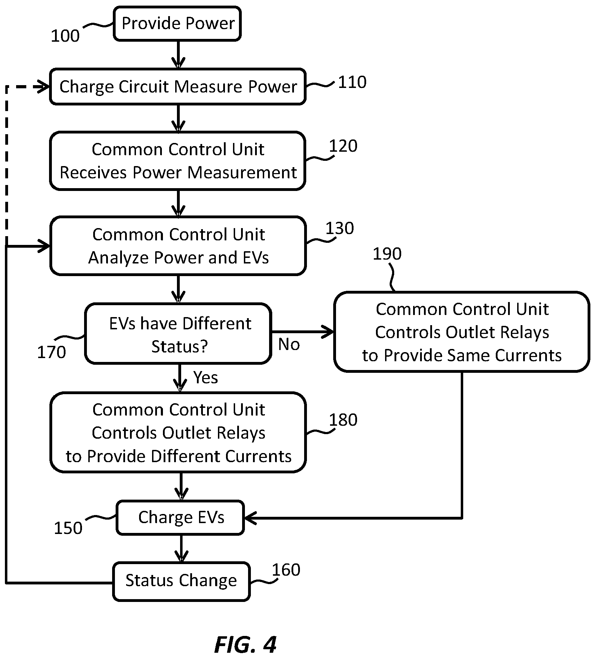

According to some embodiments of the present disclosure, an EV 60 can be preferentially electrically charged, for example in response to an EV 60 owner paying a premium for electrical current. In this case, common current control 28 can provide more current to the preferred EV 60 at the expense of current provided to other EVs 60. For example, first EV 60A could receive 50% (e.g., eighteen amps) of the available thirty-six amps of electrical current and the remaining second, third, and fourth EVs 60 could receive 16.7% or six amps each (totaling 18 amps). An algorithm in controller circuit 27 of common control unit 28 can allocate and change electrical current provided to EVs 60 connected to multi-outlet adapter 12 over time. Fig. 4 provides a general illustration of embodiments in which the status of different EVs 60 is different or is modified while charging. Steps 100-130 are as discussed above with reference to Fig. 3. In step 130, common control unit 28 can receive status information, either from an EV 60 directly (e.g., through an outlet control line 39) or from some other external source (e.g., an internet connection to a database that compares an EV 60 identification provided through an outlet control line 39 to a status entry in the database) and can then incorporate the status information in a decision to provide amounts of electrical current to EVs 60 connected to outlets 30. If a different status (step 170) for one or more EVs 60 is determined, common control unit 28 can control outlet relays 32 to provide different electrical currents to EVs 60 in response to the status determination (step 180). If no different status (step 170) for one or more EVs 60 is determined, common control unit 28 can control outlet relays 32 to provide same electrical currents to EVs 60 in response to the status determination (step 190) or at least to disregard any status associated with an EV 60. EV 60 can then be electrically charged in step 150 in response to relays 32 until the system status changes. If a status change is then detected (e.g., with an interrupt signal, e.g., as in step 160), relays 32 can be reset according to an analysis in step 130 or power measurement in step 110.

As noted, a status can be a preference based on paying higher prices for electrical current. Thus, a customer can agree to pay more (e.g., 10% or 20% more) for electrical current to electrically charge an EV 60 than other customers and then receives a preferred amount of current and can, for example electrically charge the preferred EV 60 faster. In some embodiments, a customer can have a preferred status as part of a loyalty program or other marketing program. In general, however, a status can also refer to the state of an EV 60 or the state of multiple EVs 60 connected to outlets 30. As noted with respect to Fig. 3, a status justifying a change in relay 32 switching can be a change in the power provided on common power line 22, a state of an electrical charge level in an EV 60, a connection of an EV 60 to an outlet 30, or a disconnection of an EV 60 from an outlet 30 (e.g., step 160). If additional power is made available through common power line 22, relays 32 can provide additional electrical current to electrically charge EVs 60 connected to outlets 30. If reduced power is available through common power line 22, relays 32 can reduce electrical current to electrically charge EVs 60 connected to outlets 30. If an EV 60 is connected to an outlet 30, relays 32 can electrically charge the newly connected EV 60 and reduce electrical current to electrically charge EVs 60 already connected to outlets 30. If an EV 60 is disconnected from an outlet 30, relays 32 can increase electrical current to electrically charge EVs 60 already connected to outlets 30.

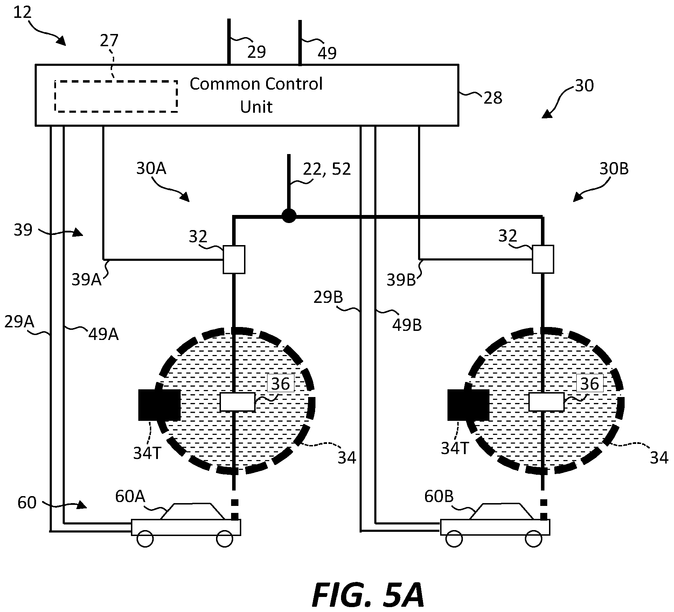

Figs. 5A, 5B, 6, 7, and 8 illustrate embodiments of the present disclosure comprising an electrical connection from common power line 22 through outlets 30 to EVs 60. Although a fixed number of outlets 30 are illustrated in the Figures, multi-outlet adapter 12 can comprise any number of outlets 30 greater than one, or in some embodiments of the present disclosure, one. Common control unit 28 receives a control pilot line 29 and proximity pilot line 49 (or generates control information from common power line 22) and provides outlet control lines 39 to each outlet 30 and to EVs 60. Outlet control lines 39 can be a single control wire or multiple control wires and can be unidirectional or bidirectional. Outlet control lines 39 connected to outlets 30 can be separate or can be common outlet control lines 39. Relays 32 responsive to outlet control lines 39 control electrical power (electrical current) from common power line 22 to power terminal(s) 36 in plug/socket 34 in each outlet 30. Each power terminal 36 can be connected to an EV 60 through a wire or wires.

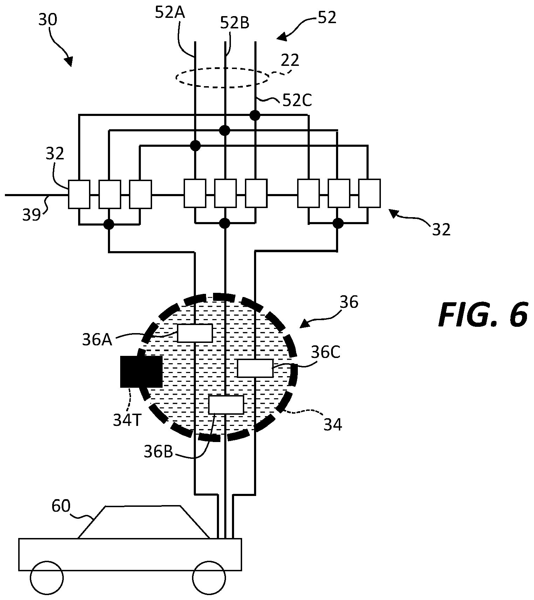

Fig. 5A illustrates a single-phase embodiment of the present disclosure with two outlets 30A, 30B and corresponding outlet control lines 39A, 39B. Hence, each outlet 30 comprises a single relay 32 for switching the single phase 52 of common power line 22 to a single power terminal 36 in plug/socket 34. Power terminal 36 of each outlet 30A, 30B can be connected to a corresponding EV 60A, 60B, e.g., with a single wire. This design distributes single-phase power from common power line 22 to multiple connected EVs 60. In some embodiments, each connected EV 60 receives or has available the same amount of electrical current so that the electrical current drawn is balanced between each EV 60. In some embodiments in which relays 32 can control the amount of current provided, connected EVs 60 can receive or have available different amounts of electrical current so that each connected EV 60 can electrically charge at a rate best suited to EV 60, for example where EVs 60 have different charging capabilities or needs or are electrically charged to different levels. (The heavy dashed line in Figs. 5A, 5B, 7, and 8 represent one or more phases 52 switched by relays 32 connected to EVs 60, as in Fig. 6 with three phases 52.)

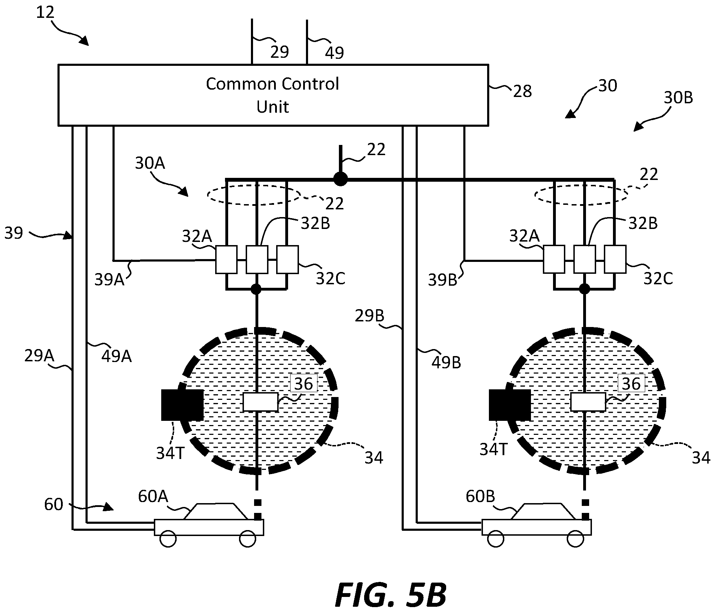

Fig. 5B illustrates an embodiment of the present disclosure with a three-phase power input and a single-phase output having two outlets 30A, 30B and corresponding outlet control lines 39A, 39B. Hence, each outlet 30 comprises three relays 32A, 32B, 32C for switching each of the three phases 52A, 52B, 52C (shown as a bus in Fig. 5B and distinguished in Fig. 1) of common power line 22 to a power terminal 36 in plug/socket 34. Power terminal 36 of each outlet 30A, 30B can be connected to a corresponding EV 60A, 60B, e.g., with one wire. Such embodiments can balance the current drawn from different phases 52, for example where multi-outlet adapter 12 comprises three outlets 30 and an EV 60 is connected to each outlet 30, electrical current can be drawn from different phases 52 to balance the power drawn from different phases 52 of common power line 22, thereby improving system efficiency and providing greater amounts of current to EVs 60 as a group, enabling faster charging.

For example, multi-phase electrical power 50 can comprise at least a first phase 52A and a second phase 52B (in a two- or three-phase power system), outlets 30 can comprise a first outlet 30A and a second outlet 30B, and common control unit 28 can electrically connect first phase 52A to a power terminal 36 in first outlet 30A and second phase 52B to a power terminal 36 in second outlet 30B. In a multi-phase electrical power 50 system with three phases 52, multi-phase electrical power 50 can comprise at least a first phase 52A, a second phase 52B, and a third phase 52C, outlets 30 can comprise a first outlet 30A, a second outlet 30B, and a third outlet 30C, and common control unit 28 can connect first phase 52A to power terminal 36 in first outlet 30A, second phase 52B to power terminal 36 in second outlet 30B, and third phase 52C to a power terminal 36 in third outlet 30C.

A three-phase electrical system can provide more (e.g., three times as much) power as a single-phase system. Generally, electric vehicle charging station 10 can have any number of phases 52 greater than zero, for example one, two, three, four, five, or six. Existing residential power systems most commonly have one or two phases 52. Commercial power systems typically have at least three phases 52. Industrial power systems or power generation systems can have three or more, e.g., three, four, five, or six phases 52.

Multi-outlet adapters 12 of the present disclosure can provide any number of outlets 30 with any number of phases 52 (and hence outlets 30 with a number of relays 32 corresponding to the number of phases 52, outlet control lines 39, and power terminals 36 providing charging current in plug/socket 34, e.g., other than CP or PP lines 29, 49). In some embodiments of the present disclosure, multi-outlet adapter 12 can connect any phase 52 to any terminal 36 through a number of relays 32 equal to the number of phases 52 connected in parallel to each terminal 36. Thus, in some embodiments, at least one of outlets 30 comprises multiple power terminals 36 providing charging current and each of power terminals 36 is electrically connected to a different phase 52. Figs. 5A and 5B show CP lines 29A, 29B and proximity lines 49A, 49B attached to EVs 60 separately from plug/sockets 34 but can be integrated into plug/sockets 34 with terminals 36 separate from power terminals 36 providing current as shown in Figs. 1 and 2.

Fig. 6 illustrates embodiments of outlets 30 connected to a three-phase power system comprising three phases 52A, 52B, 52C. Outlet 30 can comprise any number of power terminals 36 providing current but is illustrated with three power terminals 36A, 36B and 36C, collectively power terminals 36. Each phase 52 of the three-phase multi-phase electrical power 50 provided by common power line 22 can be connected through a relay 32 to each power terminal 36. Thus, the output of relays 32 connected to each phase 52 is connected in parallel to each power terminal 36. In embodiments, only one relay 32 connected to a power terminal 36 is turned on at a time to avoid electrically shorting multiple phases 52 together. Thus, each power terminal 36 can be independently and separately electrically connected to any one phase 52 as specified by control signals on outlet control line 39. This configuration provides a flexible and programmable connection between any of phases 52 and any of power terminals 36 to an EV 60 connected to outlet 30 and enables load balancing between phases 52 and different EVs 60 connected to different outlets 30.

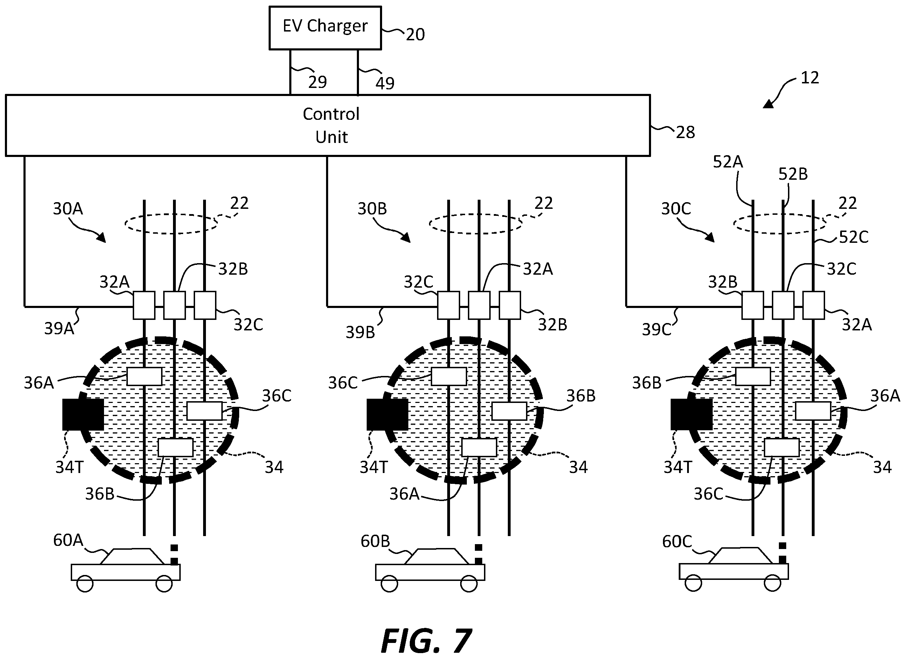

Fig. 6 illustrates embodiments with very flexible phase 52 connections to EVs 60 through power terminals 36 using relays 32 to allocate phases 52 to power terminals 36. In some embodiments of the present disclosure, phase 52 connections to EVs 60 can be mechanically controlled and distributed or allocated. As shown in Fig. 7, multi-outlet adapter 12 for a three-phase electric vehicle (EV) charger 20 comprises outlets 30 comprising plug/sockets 34 having three power terminals 36A, 36B, 36C (e.g., one power terminal 36 for each phase 52) disposed in pre-determined different and fixed locations in plug/sockets 34. The locations for power terminals 36 in each plug/socket 34 are the same so that an external electrical connector having a matching physical configuration to plug/socket 34 can be connected to plug/socket 34 of any of outlets 30. Each power terminal 36 in each outlet 30 is individually and separately connected to a phase 52. Particular phases 52 are connected to different power terminals 36 having different locations in different outlets 30. Thus, as shown in Fig. 7, (i) phase 52A is connected to power terminal 36A in outlet 30A, phase 52B is connected to power terminal 36B in outlet 30A, and phase 52C is connected to power terminal 36C in outlet 30A, (ii) phase 52A is connected to power terminal 36C in outlet 30B, phase 52B is connected to power terminal 36A in outlet 30B, and phase 52C is connected to power terminal 36B in outlet 30B, and (iii) phase 52A is connected to power terminal 36B in outlet 30C, phase 52B is connected to power terminal 36C in outlet 30C, and phase 52C is connected to power terminal 36A in outlet 30C. With these phase 52 electrical connections to power terminals 36 in plug/socket 34 of outlets 30, a common EV 60 connection with separate wires to each outlet 30 will draw current from different phases 52 on the different separate wires, thereby balancing the current draw from each phase 52 on the different wires.

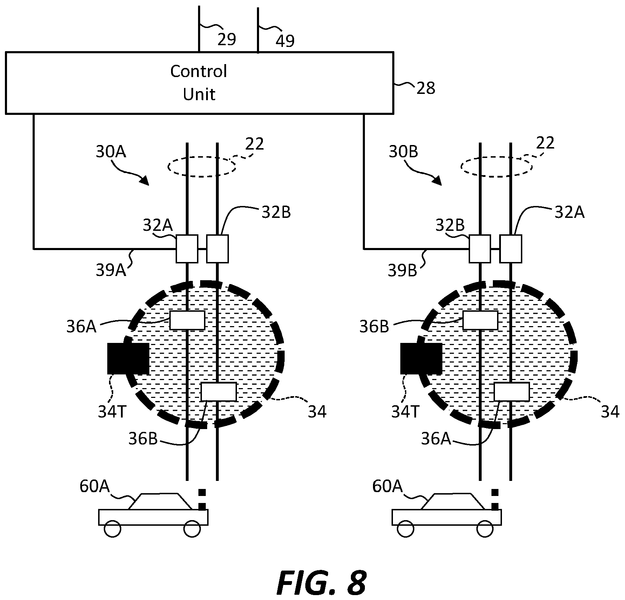

Fig. 8 illustrates a similar configuration with two phases 52. In such embodiments, (i) phase 52A is connected to power terminal 36A in outlet 30A and phase 52B is connected to power terminal 36B in outlet 30A, and (ii) phase 52A is connected to power terminal 36B in outlet 30B and phase 52B is connected to power terminal 36A in outlet 30B. In such embodiments, EVs 60 with identical electrical connections to plug/socket 34 and electrical current charging requirements will draw current from different phases 52, thus balancing the electrical load on common power line 22 and improving system efficiency. In some embodiments, if relays 32 are simply turned on, absent, or hardwired, with no common control unit 28, the EV 60 electrical connection structures of Figs. 8 and 9 will, by virtue of the different phase 52 connections to power terminals 36 in plug/sockets 34 inherently distribute electrical load between phases 52 and, at least to some extent, balance the power system.

For clarity, Figs. 6-8 omit CP lines 29 and PP lines 49 and associated non-power terminals 36, but the lines can be present in the embodiments of Figs. 6-8.

Thus, in some embodiments, each of multiple electrical phases 52 is connected to a same power terminal 36 in a same location in each outlet 30, e.g., in each plug/socket 34. In some embodiments, each of multiple electrical phases 52 is connected to a power terminal 36 in a different location in each outlet 30, e.g., in each plug/socket 34.

In some embodiments, EV charger 20 can be a smart electrical charger that incorporates or comprises common control unit 28 or common control unit 28 can incorporate or comprise EV charger 20. EV charger 20 can comprise measurement circuits that measure electrical characteristics of common power line 22, including phase angles, number of phases 52, current, and voltage of any of phases 52 in common power line 22. Outlets 30 can be electrically connected to common power line 22 through the common control unit 28 or separately.

According to embodiments of the present disclosure and as shown in Fig. 2, a multi-outlet adapter 12 for an electric vehicle (EV) 60, e.g., an adapter for an EV charger 20, can comprise a common power line 22, a common control unit 28, and outlets 30 that are each (i) connected to common power line 22, (ii) connected to common control unit 28, and (iii) operable to connect a different electric vehicle 60 at a same time so that different electric vehicles 60 can be electrically charged at the same time. Common control unit 28 can provide a separate electrical connection in parallel to each of outlets 30. Common control unit 28 can provide a common electrical connection to each of outlets 30 (e.g., a bus) and each of outlets 30 can be individually addressable to facilitate communication from common control unit 28 to a specific, identified outlet 30.

According to embodiments of the present disclosure and as shown in Fig. 1, electric vehicle (EV) charging station 10 can comprise (i) an electric vehicle (EV) charger 20 connected to common power line 22 operable to provide electrical power and a charger circuit 26 operable to measure electrical attributes of common power line 22, e.g., connected to or sensing common power line 22, (ii) an outlet 30 connected to common power line 22 and providing an electrical connection to an EV 60, outlet 30 operable to electrically charge EV 60 with electrical power from common power line 22, and (iii) an outlet control line 39 connected to charger circuit 26 and outlet 30. Outlet control line 39 can comprise a point-to-point electrical connection to each outlet 30 (as shown) or use a common bus connected to each outlet 30. The electrical power can be multi-phase electrical power 50, charger circuit 26 can measure or detect a current, current limit, or voltage of each phase 52 of multi-phase electrical power 50, and one or more of the measurements can be communicated to common control unit 28 or one or more outlets 30.

According to embodiments of the present disclosure and as shown in Fig. 1, electric vehicle (EV) charging station 10 can comprise an electric vehicle (EV) charger 20 and a multi-outlet adapter 12 connected to EV charger 20. Multi-outlet adapter 12 can comprise a common control unit 28 and outlets 30. Each outlet 30 can be connected to common control unit 28 and can be operable to electrically charge a separate, different, or individual EV 60. Two or more of outlets 30 can each be connected to a separate EV 60 and multi-outlet adapter 12 can be operable to (i) provide an amount of current to each of the connected separate EVs 60 and (ii) provide different amounts of current to two or more of the connected separate different, or individual EVs 60. Multi-outlet adapter 12 can be operable to provide different amounts of current to two or more of the connected separate EVs 60 in response to a different status or attribute of one or more of the connected separate EVs 60. The different status can be a different payment for electrical current used to electrically charge the one or more of the connected, separate, different, or individual EVs 60. In some embodiments, the different status is a different amount of electrical charge in different ones of the two or more of the connected separate EVs 60, for example so that EVs 60 having a greater need for electrical charge can be preferentially charged. If a connected EV 60 is completely electrically charged, the different status can be the state of a completely electrically charged connected EV 60. In some embodiments, multi-outlet adapter 12 can be operable to provide different amounts of current to each of the connected separate EVs 60 at different times, in response to a different EV 60 status, or a different number of connected EVs 60, or any combination of these. In some embodiments, the different amounts of current are in response to a connection of an EV 60 to an outlet 30 or disconnection of an EV 60 from an outlet 30.

According to some embodiments of the present disclosure, electric vehicle (EV) charging station 10 comprises an electric vehicle (EV) charger 20 connected to a common power line 22 transmitting multi-phase electrical power 50 and a multi-outlet adapter 12 connected to EV charger 20. Multi-outlet adapter 12 can comprise plug/sockets 34 that each (i) comprises power terminals 36, (ii) has substantially the same mechanical structure and physical arrangement of terminals 36, and (iii) has different phases 52 connected to power terminals 36 in different locations in plug/socket 34 than at least one other plug/socket 34.

According to some embodiments of the present disclosure, electric vehicle (EV) charging station 10 comprises an electric vehicle (EV) charger 20 connected to a common power line 22. Common power line 22 can transmit multi-phase electrical power 50. A multi-outlet adapter 12 can be connected to EV charger 20 and can comprise plug/sockets 34. Each plug/socket 34 (i) can comprise one power terminal 36, (ii) can have substantially the same mechanical structure and physical arrangement of power terminals 36 of any other plug/socket 34, and (iii) has a different phase 52 connected to power terminal 36 than at least one other plug/socket 34.

According to some embodiments of the present disclosure, a multi-outlet adapter 12 for an electric vehicle (EV) charger 20 can comprise an electric vehicle (EV) charger 20 connected to a common power line 22, EV charger 20 providing control pilot line 29 and proximity pilot line 49, and outlets 30. Each of outlets 30 can be connected with an other outlet 30 to common power line 22 and to at least one of outlet control lines 39 and can comprise one or more power terminals 36 that each provide an electrical connection to an electric vehicle 60. Outlets 30 are operable to connect a different electric vehicle 60 to each outlet 30 at a same time so that the different electric vehicles 60 can be electrically charged at the same time.

According to embodiments of the present disclosure, common control unit 28 can control relays 32 to balance the current flow in each electrical phase 52 of the multi-phase electrical power 50 or to otherwise optimize the current flow in each electrical phase 52. According to embodiments of the present disclosure, common control unit 28 can control relays 32 to balance the current flow in each relay 32 or to otherwise optimize the current flow in each relay 32. According to embodiments of the present disclosure, common control unit 28 can control relays 32 to balance the current flow in each outlet 30 or to otherwise optimize the current flow in each outlet 30. According to embodiments of the present disclosure, common control unit 28 can control relays 32 to balance the current flow in each power terminal 36 in each of one or more outlets 30 or to otherwise optimize the current flow in each power terminal 36. Balancing the current flow or power use in the various components of the present disclosure can increase system and power efficiency.

An electric vehicle EV charging station 10 according to an embodiment comprises:
an electric vehicle EV charger 20 comprising a common power line 22 and a charger circuit 26 connected to the common power line; and
a multi-outlet adapter 12, wherein the common power line is operable to receive electrical power, and the common control unit 28 is connected to the charger circuit. The multi-outlet adapter 12 comprises:
   a common power line 22;
   a common control unit 28; and
   outlets 30, wherein each of the outlets i) is connected to the common power line and to the common control unit, ii) comprises one or more terminals 36 that each provide an electrical connection to an electric vehicle 60, and iii) comprises one or more relays 32 responsive to the common control unit to electrically connect at least a portion of the common power line to the one or more terminals, and wherein the outlets are operable to connect a different electric vehicle to each outlet at a same time so that the different electric vehicles can be electrically charged at the same time.

In an electric vehicle EV charging station according to an embodiment, the charger circuit detects the current, current limit, or voltage of the common power line.

In an electric vehicle EV charging station according to an embodiment, the common power line provides multi-phase power and the charger circuit detects the current, current limit, or voltage of each phase of the multi-phase power.

In an electric vehicle EV charging station according to an embodiment, the EV charger comprises the common control unit.

An electric vehicle EV charging station according to an embodiment comprises a plurality of multi-outlet adapters of the kind defined above, and, for each of the multi-outlet adapters, the charger output is or is electrically connected to the common power line, and the common control unit is connected to the charger circuit.

A multi-outlet adapter 12 according to an embodiment for an electric vehicle EV charger 20 comprises:
a common power line;
a common control unit 28; and
outlets 30 that are each i) connected to the common power line, ii) connected to the common control unit, and iii) operable to connect a different electric vehicle 60 at a same time so that the different electric vehicles can be electrically charged at the same time.

In a multi-outlet adapter according to an embodiment, the common control unit provides a separate electrical connection in parallel to each of the outlets.

In a multi-outlet adapter according to an embodiment, the common control unit provides a common electrical connection to each of the outlets and wherein each of the outlets is individually identified.

An electric vehicle EV charging station 10 according to an embodiment comprises:
an electric vehicle EV charger 20 connected to a common power line 22 operable to provide electrical power, and a charger circuit 26 operable to measure electrical attributes of the common power line;
an outlet 30 connected to the common power line and providing an electrical connection to an EV 60, the outlet operable to charge the EV with electrical power from the common power line; and
a control pilot line 29 connected to the charger circuit and the outlet, and
the electrical power being multi-phase electrical power, the charger circuit measuring the current or voltage or current limit of one or more phases of the multi-phase electrical power, and one or more of the measurements being communicated to the outlet.

An electric vehicle EV charging station 10 according to an embodiment comprises:
an electric vehicle EV charger 20;
a multi-outlet adapter 12 connected to the EV charger, the multi-outlet adapter comprising a common control unit 28 and outlets 30, each outlet connected to the common control unit and operable to charge a separate EV 60.

In an electric vehicle EV charging station according to an embodiment, two or more of the outlets are connected to a separate EV and the multi-outlet adapter is operable to i) provide an amount of current to each of the connected separate EVs and ii) provide different amounts of current to two or more of the connected separate EVs.

In an electric vehicle EV charging station according to an embodiment, the multi-outlet adapter is operable to provide different amounts of current to two or more of the connected separate EVs in response to a different status of one or more of the connected separate EVs.

In an electric vehicle EV charging station according to an embodiment, the different status is a different payment for electrical current used to charge the one or more of the connected separate EVs.

In an electric vehicle EV charging station according to an embodiment, the different status is a different amount of charge in different ones of the two or more of the connected separate EVs.

In an electric vehicle EV charging station according to an embodiment, the different status is a completely charged connected separate EV.

In an electric vehicle EV charging station according to an embodiment, the multi-outlet adapter is operable to provide different amounts of current to each of the connected separate EVs at different times or at a same time.

In an electric vehicle EV charging station according to an embodiment, the different amounts of current are in response to a connection of an EV to an outlet or disconnection of an EV from an outlet.

An electric vehicle EV charging station 10 according to an embodiment comprises:
an electric vehicle EV charger 20 connected to a common power line 22, where the common power line transmits multi-phase electrical power; and
a multi-outlet adapter 12 connected to the EV charger, the multi-outlet adapter comprising plug/sockets 34, wherein each plug/socket i) comprises a terminal 36, ii) has substantially the same mechanical structure and physical arrangement of terminals, and iii) has different phases connected to different terminals than at least one other plug/socket.

An electric vehicle EV charging station 10 according to an embodiment comprises:
an electric vehicle EV charger 20 connected to a common power line 22, where the common power line transmits multi-phase electrical power; and
a multi-outlet adapter 12 connected to the EV charger, the multi-outlet adapter comprising plug/sockets 34, wherein each plug/socket i) comprises one terminal 36, ii) has substantially the same mechanical structure and physical arrangement of the terminals, and iii) has a different phase connected to the terminal than at least one other plug/socket.

A multi-outlet adapter 12 according to an embodiment for an electric vehicle EV charger 20 comprises:
an electric vehicle EV charger 20 connected to a common power line 22, the EV charger providing one or more control pilot lines 29; and
outlets 30, wherein each of the outlets i) is connected with the other outlets to the common power line and to at least one of the control pilot lines, and ii) comprises one or more terminals 36 that each provide an electrical connection to an electric vehicle 60, wherein the outlets are operable to connect a different electric vehicle to each outlet at a same time so that the different electric vehicles can be electrically charged at the same time.

A method according to an embodiment for charging multiple electric vehicles 60 at a same time comprises:
receiving electrical power;
receiving or generating information by a common control unit 28;
analyzing the information by the common control unit; and
controlling relays 32 connected to electric vehicles 60 in response to the analyzed information to connect the electrical power to the electrical vehicles.

A method according to an embodiment further comprises:
receiving a status change; and
controlling the relays in response to the status change.

Having described certain implementations of embodiments, it will now become apparent to one of skill in the art that other implementations incorporating the concepts of the disclosure may be used. Therefore, the disclosure should not be limited to certain implementations, but rather should be limited only by the spirit and scope of the following claims.

Throughout the description, where apparatus and systems are described as having, including, or comprising specific elements, or where processes and methods are described as having, including, or comprising specific steps, it is contemplated that, additionally, there are apparatus and systems of the disclosed technology that consist essentially of, or consist of, the recited elements, and that there are processes and methods according to the disclosed technology that consist essentially of, or consist of, the recited processing steps.

It should be understood that the order of steps or order for performing certain action is immaterial so long as the disclosed technology remains operable. Moreover, two or more steps or actions in some circumstances can be conducted simultaneously. The disclosure has been described in detail with particular reference to certain embodiments thereof, but it will be understood that variations and modifications can be effected within the spirit and scope of the following claims.

### PARTS LIST

- 10: electric vehicle charging station
- 12: multi-outlet adapter for electric vehicles / multi-outlet adapter
- 20: EV charger / charger
- 22: common power line
- 26: charger circuit
- 27: controller circuit
- 28: common control unit
- 29: control pilot (CP) line / CP line / CP
- 29A: control pilot line
- 29B: control pilot line
- 29C: control pilot line
- 30: outlet
- 30A: outlet / first outlet
- 30B: outlet / second outlet
- 30C: outlet / third outlet
- 31: outlet circuit
- 32: relay
- 32A: phase A relay
- 32B: phase B relay
- 32C: phase C relay
- 33: relay circuit
- 34: plug/socket
- 34T: tab
- 36: terminal / power terminal
- 36A: power terminal
- 36B: power terminal
- 36C: power terminal
- 39: outlet control line
- 39A: outlet control line
- 39B: outlet control line
- 39C: outlet control line
- 49: proximity pilot (PP) line / PP line / PP
- 49A: proximity pilot line
- 49B: proximity pilot line
- 49C: proximity pilot line
- 50: multi-phase electrical power / multi-phase power system / multi-phase power supply
- 52: phase
- 52A: phase / first phase
- 52B: phase / second phase
- 52C: phase / third phase
- 60: electric vehicle (EV)
- 60A: electric vehicle / first electric vehicle
- 60B: electric vehicle / second electric vehicle
- 60C: electric vehicle / third electric vehicle
- 60D: electric vehicle / fourth electric vehicle
- 100: provide power step
- 110: charger circuit measures power step
- 120: common control unit receives power measurement step
- 130: common control unit analyze power and EV step
- 140: common control unit control outlet relays step
- 150: charge EVs step
- 160: EV charged, disconnected, added, replace, or power measurement changes step
- 170: EVs have different status step
- 180: common control unit control outlet relays to provide different currents step
- 190: common control unit controls outlet relays to provide same current step

## Claims

1. A multi-outlet adapter (12) for an electric vehicle (EV) charger (20), comprising:
a common power line (22); and **characterized by**
a common control unit (28); and
outlets (30), wherein each of the outlets
(i) is connected to the common power line and to the common control unit,
(ii) comprises one or more terminals (36) that each provide an electrical connection to an electric vehicle (60), and
(iii) comprises one or more relays (32) responsive to the common control unit to electrically connect at least a portion of the common power line to the one or more terminals, and
wherein the outlets are operable to connect a different electric vehicle to each outlet at a same time so that the different electric vehicles can be electrically charged at the same time.

2. The multi-outlet adapter of claim 1, wherein the common power line provides multi-phase electrical power and the common control unit controls the one or more relays in the outlets to electrically connect each of one or more of the electrical phases to one or more of the terminals.

3. The multi-outlet adapter of claim 2, wherein the common control unit controls the one or more relays in at least one of the outlets to electrically connect each of two or more of the multiple electrical phases to one of the terminals in the outlet.

4. The multi-outlet adapter of claim 2, wherein the multi-phase electrical power comprises at least a first phase and a second phase, the outlets comprise a first outlet and a second outlet, and the common control unit connects the first phase to a terminal in the first outlet and the second phase to a terminal in the second outlet.

5. The multi-outlet adapter of claim 2, wherein the multi-phase electrical power comprises at least a first phase, a second phase, and a third phase, the outlets comprise a first outlet, a second outlet, and a third outlet, and the common control unit connects the first phase to a terminal in the first outlet, the second phase to a terminal in the second outlet, and the third phase to a terminal in the third outlet.

6. The multi-outlet adapter of claim 2, wherein at least one of the outlets comprises multiple terminals and each of the terminals is electrically connected to a different phase.

7. The multi-outlet adapter of claim 2, wherein one or more of the outlets comprises multiple terminals and each of the terminals is disposed in a different location in the outlet.

8. The multi-outlet adapter of claim 7, wherein each of the multiple electrical phases is connected to a same terminal in a same location in each outlet.

9. The multi-outlet adapter of claim 7, wherein each of the multiple electrical phases is connected to a different terminal in a different location in each outlet.

10. The multi-outlet adapter of claim 9, wherein the multiple electrical phases comprise a first phase and a second phase, the outlets comprise a first outlet and a second outlet, each of the first and second outlets comprises a first terminal in a first location in the outlet and a second terminal in a second location in the outlet, and wherein:
A) in the first outlet (i) the first phase is connected to the first terminal, and (ii) the second phase is connected to the second terminal; and
B) in the second outlet (i) the first phase is connected to the second terminal, and (ii) the second phase is connected to the first terminal.

11. The multi-outlet adapter of claim 9, wherein the multiple electrical phases comprise a first phase, a second phase, and a third phase, the outlets comprise a first outlet, a second outlet, and a third outlet, each of the first, second, and third outlets comprises a first terminal in a first location in the outlet, a second terminal in a second location in the outlet, and a third terminal in a third location in the outlet, and wherein:
A) in the first outlet (i) the first phase is connected to the first terminal, (ii) the second phase is connected to the second terminal, and (iii) the third phase is connected to the third terminal;
B) in the second outlet (i) the first phase is connected to the second terminal, (ii) the second phase is connected to the third terminal, and (iii) the third phase is connected to the first terminal; and
C) in the third outlet (i) the first phase is connected to the third terminal, (ii) the second phase is connected to the first terminal, and (iii) the third phase is connected to the second terminal.

12. The multi-outlet adapter of claim 1, wherein the common control unit is operable to control the relays to (i) balance the current flow in each electrical phase of the multi-phase electrical power, (ii) balance the current flow in each relay, (iii) balance the current flow in each outlet, (iv) balance the current flow in each terminal in each of one or more outlets, or (v) any combination of (i), (ii), (iii), or (iv).

13. The multi-outlet adapter of claim 1, wherein the outlets are electrically connected to the common power line through the common control unit.

14. An electric vehicle (EV) charging station (10), comprising:
an electric vehicle (EV) charger (20) comprising a common power line (22) and a charger circuit (26) connected to the common power line; and **characterized by**
a multi-outlet adapter (12) according to claim 1, wherein the common power line is operable to receive electrical power, and the common control unit (28) is connected to the charger circuit.

15. The electric vehicle (EV) charging station of claim 14, wherein the common power line provides multi-phase power and the charger circuit detects the current, current limit, or voltage of each phase of the multi-phase power.
